# EUROPEAN PATENT APPLICATION

(11) **EP 4 340 074 A1**
(43) Date of publication of application: **20.03.2024**
(21) Application number: 22875154.1
(22) Date of filing: 30.09.2022
(51) Int. Cl.: H01M 4/64

(54) **CURRENT COLLECTOR, ELECTRODE SHEET, AND METHOD FOR PREPARING CURRENT COLLECTOR**

(30) Priority: 30.09.2021 CN 202111162977
(71) Applicant: BYD Company Limited, Shenzhen, Guangdong 518118 (CN)
(72) Inventor: CUI, Yanhui, Shenzhen, Guangdong 518118 (CN); PAN, Yi, Shenzhen, Guangdong 518118 (CN); MEI, Riguo, Shenzhen, Guangdong 518118 (CN)
(74) Representative: DehnsGermany Partnerschaft von Patentanwälten
(86) International application number: PCT/CN2022/123176
(87) International publication number: WO 2023/051773

(57) **Abstract**

A current collector, an electrode sheet, and a preparation method for a current collector are disclosed. The current collector includes a support layer, a first electrically conductive layer and a second electrically conductive layer. The support layer has a first surface and a second surface arranged opposite to each other. The first electrically conductive layer has a grid structure distributed on the first surface and/or the second surface of support layer. The second electrically conductive layer is provided on a surface of the first electrically conductive layer away from the support layer.

## Description

### CROSS-REFERENCE TO RELATED APPLICATIONS

The present disclosure claims priority to Chinese Patent Application No. 202111162977.X filed on September 30, 2021 and entitled "Current collector, electrode sheet and preparation method for current collector", which is incorporated herein by reference in its entirety.

### FIELD

The present disclosure relates to the technical field of batteries, and specifically, to a current collector, an electrode sheet, and a preparation method for a current collector.

### BACKGROUND

Lithium ion batteries are widely used in the field of mobile power sources and energy storage. With the social development, more and more higher requirement is raised for the energy density of power sources. The improvement of the energy density of lithium-ion batteries becomes increasingly urgent.

In related art, the most essential solution to improve the energy density is to fundamentally improve the energy density by changing the battery material system. However, it is very difficult to realize the innovation and commercial application of battery materials in a short time.

Therefore, given the limited existing material systems, how to design a battery with higher energy density based on the technical innovation of the current collector structure to meet the requirement of long mile range is a problem that is always considered and needs to be solved urgently in the industry.

### SUMMARY

An object of the present disclosure is to provide a current collector, an electrode sheet, and a preparation method for a current collector.

In a first aspect of the present disclosure, a current collector is provided. The current collector includes:
a support layer, having a first surface and a second surface arranged opposite to each other;
a first electrically conductive layer, having a grid structure distributed on the first surface and/or the second surface of the support layer;
a second electrically conductive layer, arranged on a surface of the first electrically conductive layer away from the support layer.

Optionally, the first electrically conductive layer has a thickness in the range of 0.1 µm to 50 µm.

Optionally, the support layer has a thickness in the range of 0.1 µm-20 µm.

Optionally, the current collector has a thickness in the range of 1 µm to 100 µm.

Optionally, the grid structure includes grid holes having an area in the range of 0.01 cm² to 100 cm².

The grid structure includes grid holes, defined by grid walls having a width in the range of 0.1 mm to 50 mm.

Optionally, the second electrically conductive layer has a thickness in the range of 0.1 µm to 50 µm.

Optionally, the support layer is a thermoplastic elastomer layer with pores.

Optionally, the current collector further includes a third electrically conductive layer, having a grid structure distributed on the first surface or the second surface of the support layer.

Optionally, the first electrically conductive layer is distributed on the first surface of the support layer, and the third electrically conductive layer is distributed on the second surface of the support layer.

Optionally, the first electrically conductive layer is distributed on the second surface of the support layer, and the third electrically conductive layer is distributed on the first surface of the support layer.

Optionally, the second electrically conductive layer is provided on a surface of the third electrically conductive layer away from the support layer.

Optionally, the first electrically conductive layer is a metal component, and the third electrically conductive layer is a metal component.

In a second aspect of the present disclosure, an electrode sheet is provided. The electrode sheet includes a current collector according to the first aspect, and an electrode slurry layer formed on the second electrically conductive layer.

In a third aspect of the present disclosure, a preparation method for a current collector is provided. The preparation method for a current collector includes the following steps:
providing a support layer;
forming a first electrically conductive layer on a first surface and/or a second surface of the support layer by at least one of press printing, printing, deposition, and magnetron sputtering, where the first electrically conductive layer has a grid structure distributed on the support layer;
forming a second electrically conductive layer on the whole surface of the first electrically conductive layer; and
drying the second electrically conductive layer, to solidify the second electrically conductive layer on the surface of the first electrically conductive layer, so as to prepare the current collector.

One technical effect of the present disclosure is that a current collector is provided. The current collector includes a support layer, a first electrically conductive layer having a grid structure and a second electrically conductive layer formed on the first electrically conductive layer. By providing the support layer, the strength requirement of the current collector is met, and by the first electrically conductive layer and the second electrically conductive layer, the electrical conductivity of the current collector is attained. In the embodiment of the present disclosure, the first electrically conductive layer has a grid structure formed on the support layer, thus reducing the weight per unit area of the current collector, and improving the energy density of the battery. The first electrically conductive layer having a grid structure is formed on the support layer, the current collector as a whole can have a porous structure, and the porous current collector is permeable to ions in a direction perpendicular to the thickness of the current collector, that is, the current collector allows lithium ions to penetrate through, thus increasing the application scenarios of the current collector.

Other features and advantages of the present disclosure will become apparent from the following detailed description of exemplary embodiments of the present disclosure with reference to the drawings.

### BRIEF DESCRIPTION OF THE DRAWINGS

Accompanying drawings that constitute a part of the specification show embodiments of the present disclosure, and are used together with the specification to explain the principle of the present disclosure.
FIG. 1 shows a first schematic view of a current collector according to the present disclosure.
FIG. 2 shows a second schematic view of a current collector according to the present disclosure.
FIG. 3 shows a third schematic view of a current collector according to the present disclosure.
FIG. 4 shows a fourth schematic view of a current collector according to the present disclosure.
FIG. 5 shows a fifth schematic view of a current collector according to the present disclosure.
FIG. 6 shows a sixth schematic view of a current collector according to the present disclosure.
FIG. 7 shows a schematic structural view of a first electrically conductive layer according to the present disclosure.
FIG. 8 shows a flow chart of a preparation method for a current collector according to the present disclosure.

### List of reference numerals:

1. support layer ; 11. first surface; 12. second surface; 2. first electrically conductive layer; 3. second electrically conductive layer; 4. third electrically conductive layer; 20. grid structure; 201. grid hole; 202. grid wall.

### DETAILED DESCRIPTION

Various exemplary embodiments of the present disclosure are now be described in detail with reference to the accompanying drawings. It is to be noted that unless otherwise specified, the relative arrangement, numerical expressions, and numerical values of components and steps described in the embodiments do not limit the scope of the disclosure.

The following descriptions of at least one exemplary embodiment are merely illustrative, and do not constitute any limitation on the present disclosure and application or use thereof in any way.

Technologies, and devices known to those of ordinary skill in related art may not be discussed in detail, but where appropriate, the techniques and the devices should be considered as a part of the specification.

In all examples shown and discussed herein, any specific value should be construed to be merely exemplary, and not as limitations. Therefore, other examples of exemplary embodiments may have different values.

It should be noted that similar reference numerals and letters indicate similar items in the following drawings. Therefore, once an item is defined in a drawing, it has no need to be discussed further in the following drawings.

Therefore, given the limited existing material systems at present, efforts are made to reduce the proportion of inactive components in the battery to improve the energy density of the battery in the industry. Porous current collector technology is a key technology to reduce the proportion of inactive components, and which can also improve the energy density of the battery. At present, the types of porous current collectors include foamed metal sheets, perforated metal foils, and carbon fiber sheets, etc. In the existing porous current collector technology, the foamed metal sheet has large thickness and high weight per unit area, reducing the specific energy density of the battery; and the perforated metal foil has the problem of high perforation cost. The strength of the current collector decreases seriously when the perforated hole is larger. Carbon fiber sheets, such as carbon fiber cloth, are brittle and expensive.

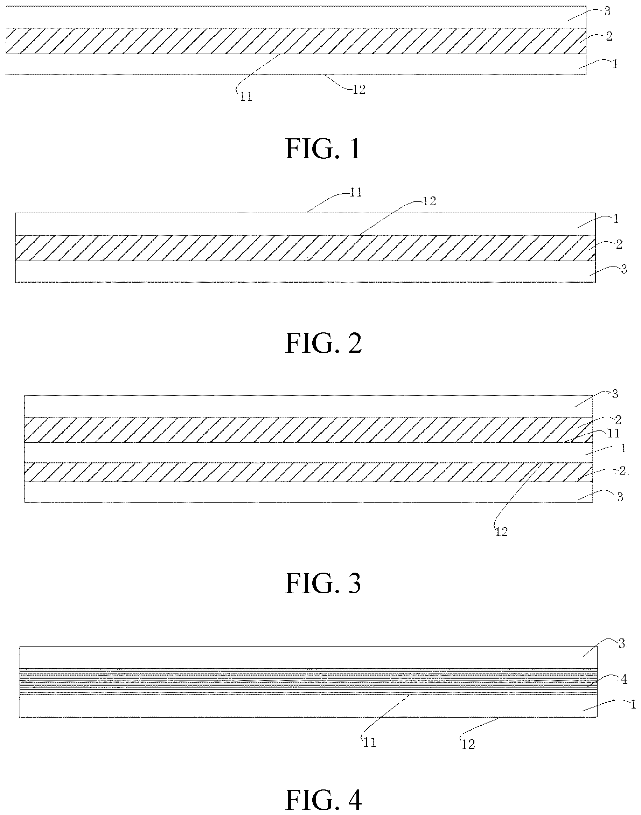

In view of the above technical problems in a first aspect of the present disclosure, a current collector is provided. As shown in FIGs. 1 to 3, the current collector includes: a support layer 1, a first electrically conductive layer 2 and a second electrically conductive layer 3.

The support layer 1 has a first surface 11 and a second surface 12 arranged opposite to each other. The first electrically conductive layer 2 has a grid structure 20 distributed on the first surface 11 and/or the second surface 12 of the support layer 1. The second electrically conductive layer 3 is provided on a surface of the first electrically conductive layer 2 away from the support layer 1.

In other words, the current collector mainly includes the support layer 1, the first electrically conductive layer 2 and the second electrically conductive layer 3. The support layer 1 has structural strength, ensuring the strength of the current collector to meet the assembly requirement of the battery. Moreover, the support layer 1 has pores, allowing lithium ions to pass through. The first electrically conductive layer 2 is formed on the support layer 1, and the second electrically conductive layer 3 is formed on the first electrically conductive layer 2. The conductive layer is formed to have a grid structure, such that the current collector as a whole has a porous structure, allowing lithium ions to pass through, and ensuring the lithium ion transmission ability of the current collector. The porous current collector allows lithium ion to penetrate through in a direction perpendicular to its two-dimensional plane (that is, the thickness direction of the porous current collector), thus broadening the application scenarios. For example, the current collector can be applied to electrochemical lithium supplementation.

In an embodiment, as shown in FIG. 1, the first electrically conductive layer 2 has a grid structure 20 distributed on the first surface 11 of the support layer 1, the second electrically conductive layer 3 is formed on the first electrically conductive layer 2, and no conductive layer is provided on the second surface 12 of the support layer 1, to form a first current collector. The first current collector only includes the support layer 1, the first electrically conductive layer 2 and the second electrically conductive layer 3.

In another embodiment, as shown in FIG. 2, the first electrically conductive layer 2 has a grid structure 20 distributed on the second surface 12 of the support layer 1, the second electrically conductive layer 3 is formed on the first electrically conductive layer 2, and no conductive layer is provided on the first surface 11 of the support layer 1, to form a first current collector. The structure of the first current collector shown in FIG. 2 differs from the structure of the first current collector shown in FIG. 1 in that the first electrically conductive layer 2 is provided on different surfaces of the support layer 1.

In another embodiment, as shown in FIG. 3, the first electrically conductive layer 2 has a grid structure 20 distributed on the first surface 11 and the second surface 12 of the support layer 1, and the second electrically conductive layer is formed on the two first electrically conductive layers 2 respectively, to form a first current collector. The structure of the first current collector shown in FIG. 3 differs from the structure of the first current collector shown in FIGs. 1 and 2 in that in the first current collector shown in FIG. 3, the first electrically conductive layer 2 is formed on both the first surface 11 and the second surface 12 of the support layer 1; and in the first current collector shown in FIGs. 1 and 2, the first electrically conductive layer 2 is merely formed on the first surface 11 or the second surface 12 of the support layer 1.

In the embodiment of the present disclosure, the first electrically conductive layer 2 has a grid structure 20 distributed on the support layer 1. Since the first electrically conductive layer 2 has a grid structure 20, lithium ions can easily pass through the grid holes of the grid structure 20. On the one hand, the grid structure of the first electrically conductive layer 2 ensures the normal penetration of lithium ions; and on the other hand, the grid structure 20 of the first electrically conductive layer 2 reduces the weight per unit area of the current collector, thus improving the energy density of the battery and reducing the internal resistance of the current collector, to form a larger current for external output. The first electrically conductive layer 2 is electrically conductive, ensuring the electrical conductivity of the current collector. Therefore, the first electrically conductive layer 2 having a grid structure ensures the electron collection ability and lithium ion transmission ability of the current collector.

The second electrically conductive layer 3 is provided on a surface of the first electrically conductive layer 2 away from the support layer 1. The second electrically conductive layer 3 further improves the electronic conductivity of the current collector without hindering the penetration of lithium ions. Particularly, the second electrically conductive layer 3 is provided on the whole surface of the first electrically conductive layer 2. The second electrically conductive layer 3 on a grid wall 202 cooperates with the first electrically conductive layer 2 (for example, the second electrically conductive layer 3 covering the grid area makes up for the deficiency of the first electrically conductive layer 2), to ensure the electron collection ability and lithium ion transmission ability of the current collector. Particularly, the third electrically conductive layer 3 collects electrons in hollowed-out areas in the grid, without hindering the lithium ion transmission.

The current collector according to the embodiment of the present disclosure has high strength, light weight, good electrical conductivity, and also a porous structure, ensuring the normal transmission of lithium ions.

In an embodiment, the first electrically conductive layer 2 has a thickness in the range of 0.1 µm to 50 µm. Optionally, the first electrically conductive layer 2 has a thickness in the range of 1 µm-10 µm.

In an embodiment, the support layer 1 has a thickness in the range of 0.1 µm-20 µm. Optionally, the support layer 1 has a thickness in the range of 5 µm-15 µm.

In an embodiment, the second electrically conductive layer 3 has a thickness in the range of 0.1 µm to 50 µm. Optionally, the second electrically conductive layer 3 has a thickness in the range of 5 µm-20 µm.

In an embodiment, the current collector has a thickness in the range of 1 µm to 100 µm. Optionally, the current collector has a thickness in the range of 15 µm to 50 µm.

Particularly, in this embodiment, the thickness of the first electrically conductive layer 2 is defined. Considering the overall electrical conductivity and the ion transmission performance of the current collector, the thickness of the first electrically conductive layer 2 is set in this range, which reduces the weight per unit area of the current collector, reduces the proportion of non-active materials, and improves the energy density of the battery, while the overall thickness of the current collector is not affected.

In this embodiment, the thickness of the support layer 1 is defined. By controlling the thickness of the support layer 1 in this range, the weight per unit area of the current collector is reduced, the proportion of non-active materials is reduced, and the energy density of the battery is improved when used in a battery, while the overall strength of the current collector is not affected.

In this embodiment, the thickness of the second electrically conductive layer 3 is defined. The thickness of the second electrically conductive layer 3 affects the assistance of the first electrically conductive layer 2 in the electron collection ability and the lithium ion transmission ability of the current collector. As the thickness of the second electrically conductive layer 3 decreases, the electron collection ability of the current collector decreases, and the lithium ion transmission ability increases; or otherwise, the electron collection ability of the current collector increases, and the lithium ion transmission ability decreases. In this embodiment, by controlling the thickness of the second electrically conductive layer 3 within this range, the normal electron collection ability and lithium ion transmission ability of the current collector can be effectively improved.

In this embodiment, the thickness of the support layer 1, the first electrically conductive layer 2 and the second electrically conductive layer 3 is defined, such that the thickness of the prepared current collector is defined within a reasonable range. In this embodiment, by defining the thickness of the current collector within this range, the overall electrical conductivity of the current collector is ensured on the one hand; and on the other hand, the proportion of non-active materials is reduced, ensuring the energy density of the battery.

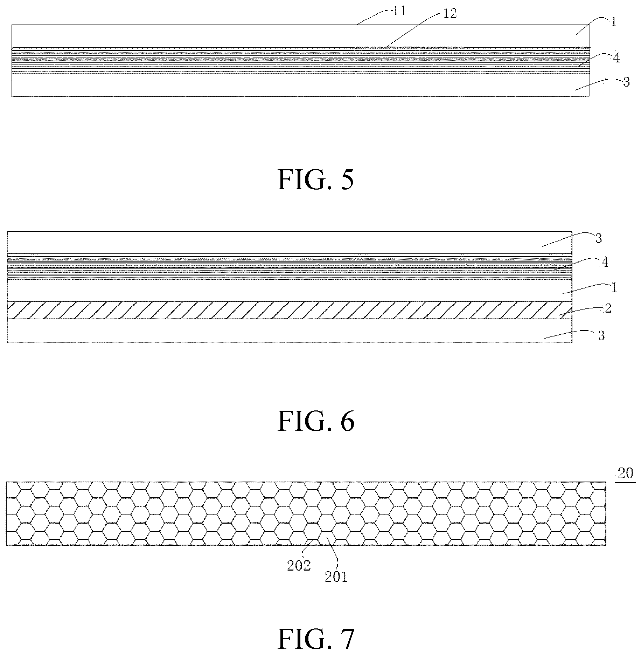

In an embodiment, as shown in FIG. 7, the grid structure 20 includes several grid holes 201 arranged into an array, and each of the grid hole 201 has an area in the range of 0.01 cm² to 100 cm².

Further, particularly, the grid hole 201 is defined by grid walls 202, and the grid wall 202 has a wall thickness in the range of 0.1 mm to 50 mm.

Particularly, the wall thickness of the grid wall 202 affects the electrical conductivity and the weight per unit area of the first electrically conductive layer 2. To balance the electrical conductivity of the first electrically conductive layer 2 and the weight per unit area of the first electrically conductive layer 2, the wall thickness of the grid wall 202 is defined in this embodiment. By defining the thickness of the grid wall 202 in this range, the weight per unit area of the first electrically conductive layer 2 is reduced, and the energy density of the battery is improved; and the electrical conductivity of the current collector is ensured.

In the embodiment, the grid structure includes several grid holes 201 arranged into an array, and the grid holes 201 are distributed on the support layer 1 in the form of an array. The grid hole 201 can be a rectangular hole, a round hole, and a diamond hole, etc. the shape of the grid hole 201 is not particularly limited in this embodiment. In the embodiment, each grid hole 201 has an area in the range of 0.01 cm² to 100 cm². Optionally, each grid hole 201 has an area in the range of 1 cm² to 10 cm².

Particularly, the area of the grid hole 201 affects the electrical conductivity of the first electrically conductive layer 2 and the weight per unit area of the current collector. To balance the electrical conductivity of the first electrically conductive layer 2 and the weight per unit area of the first electrically conductive layer 2, the area of the grid hole 201 is defined in this embodiment. Studies show that by defining the area of the grid hole 201 in this range, the weight per unit area of the first electrically conductive layer 2 is reduced, the energy density of the battery is improved, and the electrical conductivity of the current collector is ensured.

In an embodiment, the support layer 1 is a thermoplastic elastomer layer with pores.

Particularly, the support layer 1 is a substrate, the first electrically conductive layer 2 is formed on the support layer 1, and the second electrically conductive layer 3 is formed on the first electrically conductive layer 2. The support layer 1 is a thermoplastic elastomer layer with pores. For example, pores are formed on the support layer 1, where the diameter of the pores is less than 100 µm.

In this embodiment, the support layer 1 is a thermoplastic elastomer layer with pores, to improve the structural strength of the current collector.

Particularly, the thermoplastic elastomer layer is specifically one of a polyolefin thermoplastic elastic layer, a polyurethane thermoplastic elastic layer or a polyamide thermoplastic elastic layer. The support layer 1 can also be a composite film layer, which is formed by physically pressing at least two of a polyolefin thermoplastic elastic layer, a polyurethane thermoplastic elastic layer or a polyamide thermoplastic elastic layer.

In a specific embodiment, the material of the support layer 1 is the same as that of the separator of the lithium battery, thus ensuring the strength of the current collector, meeting the requirements in battery production, and ensuring the normal penetration of lithium ions.

In an embodiment, the first electrically conductive layer 2 having a grid structure is formed on the surface of the support layer 1 by deposition.

In an embodiment, the second electrically conductive layer 3 includes a conductive agent and a binder. The conductive agent and the binder are mixed uniformly and then applied to the surface of the first electrically conductive layer 2 to form the second electrically conductive layer 3.

Particularly, the conductive agent is one of carbon black, carbon nanotubes or graphene. The binder is an electrically conductive binder, and the binder is specifically a polyvinylidene fluoride (PVDF) binder, a polytetrafluoroethylene (PTFE) binder, a carboxymethyl cellulose (CMC) binder or a styrene-butadiene rubber (SBR) binder.

The binder is mixed with the conductive agent at a weight ratio of 0.5:99.5 to 50:50,a solvent (NMP, water, and so on) is added to prepare a slurry, and then the slurry is coated on the surface of the first electrically conductive layer 2 to form the second electrically conductive layer 3.

In an embodiment, as shown in FIGs. 4 to 6, the current collector further includes a third electrically conductive layer 4. The third electrically conductive layer 4 has a grid structure 20 distributed on the first surface 11 or the second surface 12 of the support layer 1.

The first electrically conductive layer 2 is distributed on the first surface 11 of the support layer 1, and the third electrically conductive layer 4 is distributed on the second surface 12 of the support layer 1. Alternatively, the first electrically conductive layer 2 is distributed on the second surface 12 of the support layer 1, and the third electrically conductive layer 4 is distributed on the first surface 11 of the support layer 1. The third electrically conductive layer 4 has a grid structure 20 distributed on the first surface 11 or the second surface 12 of the support layer 1, and the second electrically conductive layer 3 is provided on a surface of the third electrically conductive layer 4 away from the support layer 1.

Particularly, the current collector further includes the third electrically conductive layer 4. In an embodiment, the third electrically conductive layer 4 has a grid structure 20 distributed on the first surface 11 of the support layer 1. In another embodiment, the third electrically conductive layer 4 has a grid structure 20 distributed on the second surface 12 of the support layer 1.

As shown in FIG. 6, the third electrically conductive layer 4 is distributed on the first surface 11 of the support layer 1, the first electrically conductive layer 2 is distributed on the second surface 12 of the support layer 1, and the second electrically conductive layer 3 is formed respectively on the surface of the first electrically conductive layer 2 and the surface of the third electrically conductive layer 4, to form a third current collector. The third current collector includes the support layer 1, the first electrically conductive layer 2, the second electrically conductive layer 3 and the third electrically conductive layer 4.

Alternatively, in an embodiment, the third electrically conductive layer 4 is distributed on the second surface 12 of the support layer 1, the first electrically conductive layer 2 is distributed on the first surface 11 of the support layer 1, and the second electrically conductive layer 3 is formed respectively on the surface of the first electrically conductive layer 2 and the surface of the third electrically conductive layer 4, to form a third current collector.

As shown in FIG. 6, the first electrically conductive layer 2 is distributed on the second surface 12 of the support layer 1, and the third electrically conductive layer 4 is distributed on the first surface 11 of the support layer 1. In this case, the current collector is respectively applied with a positive or a negative electrode slurry on two surfaces, and then cut, for use as a battery core.

Alternatively, in an embodiment, as shown in FIG. 4, the third electrically conductive layer 4 has a grid structure 20 distributed on the first surface 11 of the support layer 1, the second electrically conductive layer 3 is formed on the surface of the third electrically conductive layer 4, and no conductive layer is provided on the second surface 12 of the support layer 1, to form a second current collector. The second current collector only includes the support layer 1, the third electrically conductive layer 4 and the second electrically conductive layer 3.

In another embodiment, as shown in FIG. 5, the third electrically conductive layer 4 has a grid structure 20 distributed on the second surface 12 of the support layer 1, the second electrically conductive layer 3 is formed on the surface of the third electrically conductive layer 4, and no conductive layer is provided on the first surface 11 of the support layer 1, to form a second current collector.

In another embodiment, the third electrically conductive layer 4 has a grid structure 20 distributed on the first surface 11 and the second surface 12 of the support layer 1, and the second electrically conductive layer 3 is formed respectively on the surfaces of the two third electrically conductive layers 4, to form a second current collector.

In a specific embodiment, the first electrically conductive layer 2 is a positive electrode conductive layer, and the third electrically conductive layer 4 is a negative electrode conductive layer. Particularly, the support layer 1 is only ionically conductive and not electronically conductive, and can be regarded as a separator of the battery. The first electrically conductive layer 2 is a positive electrode conductive layer located on one side of the support layer 1, and the third electrically conductive layer 4 is a negative electrode conductive layer located on another side of the support layer 1. Alternatively, the first electrically conductive layer 2 is a negative electrode conductive layer, and the third electrically conductive layer 4 is a positive electrode conductive layer. In this embodiment, description is made by way of examples where the first electrically conductive layer 2 is a positive electrode conductive layer, and the third electrically conductive layer 4 is a negative electrode conductive layer. For example, the positive electrode conductive layer is an aluminum grid structure, and the negative electrode conductive layer is a copper grid structure.

In an embodiment, the positive electrode conductive layer is distributed on the first surface 11 of the support layer 1, and the second electrically conductive layer 3 is formed on the positive electrode conductive layer, to form a positive electrode current collector. Alternatively, the positive electrode conductive layer is distributed on the second surface 12 of the support layer 1, and the second electrically conductive layer 3 is formed on the positive electrode conductive layer, to form a positive electrode current collector. Alternatively, the positive electrode conductive layer is distributed on the first surface 11 and the second surface 12 of the support layer 1, and the second electrically conductive layer 3 is formed on the positive electrode conductive layer to form a positive electrode current collector. That is, the current collector is a positive electrode current collector.

In an embodiment, the negative electrode conductive layer is distributed on the first surface 11 of the support layer 1, and the second electrically conductive layer 3 is formed on the negative electrode conductive layer, to form a negative electrode current collector. Alternatively, the negative electrode conductive layer is distributed on the second surface 12 of the support layer 1, and the second electrically conductive layer 3 is formed on the negative electrode conductive layer, to form a negative electrode current collector. Alternatively, the negative electrode conductive layer is distributed on the first surface 11 and the second surface 12 of the support layer 1, and the second electrically conductive layer 3 is formed on the negative electrode conductive layer, to form a negative electrode current collector. That is, the second current collector is a negative electrode current collector.

In an embodiment, the support layer 1 is only ionically conductive and not electronically conductive, and can be regarded as a separator of the battery. The first electrically conductive layer 2 is a positive electrode conductive layer located on one side of the support layer 1, and the third electrically conductive layer 4 is a negative electrode conductive layer located on another side of the support layer 1. For example, the positive electrode conductive layer is distributed on the first surface 11 of the support layer 1, and the second electrically conductive layer 3 is formed on the positive electrode conductive layer; and at the same time, the negative electrode conductive layer is distributed on the second surface 12 of the support layer 1, and the second electrically conductive layer 3 is formed on the negative electrode conductive layer, to from a third current collector. That is, the third current collector is a structure integrated with the positive electrode current collector and the negative electrode current collector.

In an embodiment, the first electrically conductive layer 2 is a metal component, and the third electrically conductive layer 4 is a metal component.

Particularly, the first electrically conductive layer 2 and the third electrically conductive layer 4 are both metal grid components. The first electrically conductive layer 2 can be a positive electrode conductive layer, and the third electrically conductive layer 4 can be a negative electrode conductive layer. Alternatively, the first electrically conductive layer 2 can be a negative electrode conductive layer, and the third electrically conductive layer 4 can be a positive electrode conductive layer.

When the first electrically conductive layer 2 is a positive electrode conductive layer, the first electrically conductive layer 2 is an aluminum component. For example, the first electrically conductive layer 2 having a grid structure 20 is formed by an aluminum component.

When the third electrically conductive layer 4 is a negative electrode conductive layer, the third electrically conductive layer 4 is a copper component. For example, the third electrically conductive layer 4 having a grid structure 20 is formed by a copper component.

In the lithium ion battery, the positive electrode has a high potential. The oxide layer of aluminum is relatively dense, and can prevent the oxidation of the current collector. Copper will undergo lithium intercalation at a high potential, and is suitably not used as a positive electrode conductive layer. Therefore, the positive electrode conductive layer is generally an aluminum foil. The negative electrode has a low potential, and aluminum tends to form a Al-Li alloy at a low potential. Therefore, the negative electrode conductive layer is generally a copper foil. The copper foil and aluminum foil are not interchangeable.

In a second aspect of the present disclosure, an electrode sheet is provided. The electrode sheet includes a current collector according to the first aspect, and an electrode slurry layer. The electrode slurry layer is formed on the second electrically conductive layer 3. For example, the electrode slurry layer is coated or sprayed on the second electrically conductive layer 3. The electrode sheet includes a positive electrode sheet and a negative electrode sheet.

In an embodiment, the electrode slurry layer includes an electrode active material, a conductive agent, and a binder. The active material is a positive electrode active material or a negative electrode active material for use in a battery. For example, the positive electrode active material includes one of lithium cobalt oxide, lithium manganese oxide, lithium iron phosphate and a ternary material, etc. The negative electrode active material includes a carbon material. For example, the negative electrode active material is graphite. For example, the conductive agent includes one of carbon black, carbon nanotubes or graphene. For example, the binder is an electrically conductive binder. For example, the binder is a polyvinylidene fluoride (PVDF) binder, a polytetrafluoroethylene (PTFE) binder, a carboxymethyl cellulose (CMC) binder, or a styrene-butadiene rubber (SBR) binder.

In an embodiment, the first electrically conductive layer 2 is distributed on the first surface 11 and/or the second surface 12 of the support layer 1, and the second electrically conductive layer 3 is formed on the first electrically conductive layer 2, to form a first current collector. A positive electrode slurry layer is provided on the first current collector to form a first electrode sheet. That is, the first electrode sheet is a positive electrode sheet.

In an embodiment, the third electrically conductive layer 4 is distributed on the first surface 11 and/or the second surface 12 of the support layer 1, and the second electrically conductive layer 3 is formed on the surface of the third electrically conductive layer 4, to form a second current collector. A negative electrode slurry layer is provided on the second current collector to form a second electrode sheet. That is, the second electrode sheet is a negative electrode sheet.

In an embodiment, the first electrically conductive layer 2 is distributed on the first surface 11 of the support layer 1, the second electrically conductive layer 3 is provided on the first electrically conductive layer 2, and a positive electrode slurry layer is provided on the second electrically conductive layer 3; and the third electrically conductive layer 4 is distributed on the second surface 12 of the support layer 1, the second electrically conductive layer 3 is formed on the third electrically conductive layer 4, and a negative electrode slurry layer is formed on the second electrically conductive layer 3, such that the positive electrode sheet and the negative electrode sheet are integrated. The structure integrating the positive electrode sheet and the negative electrode sheet is defined as a third electrode sheet. In the third electrode sheet, the support layer corresponds to a separator structure in a battery, and the support layer is only ionically conductive and not electronically conductive.

In an embodiment, a battery core is provided. The battery core includes a positive electrode sheet, a negative electrode sheet, and a separator provided between the positive electrode sheet and the negative electrode sheet. When the positive electrode sheet and the negative electrode sheet are separate structures, the positive electrode sheet, the separator, and the negative electrode sheet are wound into the battery core. Alternatively, the active material layer of a single-sided positive electrode sheet is attached to a surface of the support layer 1 in a single-sided negative electrode sheet, and wound into the battery core. In this embodiment, the thickness of the current collector of the battery core is further reduced, and the energy density of the battery is improved.

When the positive electrode sheet and the negative electrode sheet are integrated into one piece, the battery core includes multiple third electrode sheets, and a separator is provided between adjacent third electrode sheets.

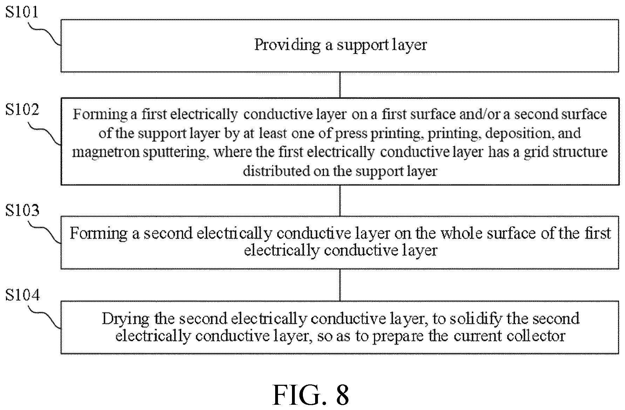

In a third aspect of the present disclosure, a preparation method for a current collector is provided. As shown in FIG. 8, the preparation method for a current collector includes the following steps:
S101: providing a support layer 1;
S102: forming a first electrically conductive layer 2 on a first surface 11 and/or a second surface 12 of the support layer 1 by at least one of press printing, printing, deposition, and magnetron sputtering, where the first electrically conductive layer 2 has a grid structure 20 distributed on the support layer 1;
S103: applying a slurry on the whole surface of the first electrically conductive layer 2 to form a second electrically conductive layer 3; and
S104: drying the second electrically conductive layer 3, to solidify the second electrically conductive layer 3 on the surface of the first electrically conductive layer 2, so as to prepare the current collector.

Particularly, the support layer 1 is a thermoplastic elastomer layer with pores, to improve the structural strength of the current collector.

Particularly, the thermoplastic elastomer layer is specifically at least one of a polyolefin thermoplastic elastic layer, a polyurethane thermoplastic elastic layer or a polyamide thermoplastic elastic layer. The support layer 1 can also be a composite film layer, which is formed by physically pressing at least two of a polyolefin thermoplastic elastic layer, a polyurethane thermoplastic elastic layer or a polyamide thermoplastic elastic layer.

In a specific embodiment, the material of the support layer 1 is the same as that of the separator of the lithium battery, thus ensuring the strength of the current collector, meeting the requirements in battery production, and ensuring the normal penetration of lithium ions.

In Step S102, the first electrically conductive layer 2 is printed on the support layer 1, for example, by screen printing. Alternatively, the first electrically conductive layer 2 is printed on the support layer 1 by 3D printing. Alternatively, the first electrically conductive layer 2 is formed on the support layer 1 by deposition or the first electrically conductive layer 2 is formed on the support layer 1 by magnetron sputtering.

In a specific embodiment, the first electrically conductive layer 2 can be attained by the following processes:
1) A grid structure 20 is printed on the support layer 1, and then a metal grid structure is formed by at least one of physical vapor deposition, chemical vapor deposition, electrochemical deposition and magnetron sputtering; and the first electrically conductive layer 2 is cleaned, and dried.
2) The first electrically conductive layer 2 is directly formed on the support layer 1 by printing or 3D printing and dried.
3) A grid structure 20 is printed on the support layer 1, and a metal layer is electroplated on the grid structure 20, then washed, and dried. The electroplated metal layer acts to increase the electrical conductivity of the first electrically conductive layer 2.

Notably, in this embodiment, the process of forming the first electrically conductive layer on the support layer 1 is not particularly limited, as long as the formed first electrically conductive layer 2 has a grid structure 20, and the thickness and the grid size of the first electrically conductive layer 2 are met. The third electrically conductive layer 4 is formed on the support layer 1 in the same way as that for the first electrically conductive layer 2.

In Step 103, the second electrically conductive layer 3 can be formed on the first electrically conductive layer 2 by spraying or coating. The formation of the second electrically conductive layer 3 by spraying or coating facilitates the control of the thickness of the second electrically conductive layer 3.

In Step 104, before drying the second electrically conductive layer 3, the second electrically conductive layer 3 is rolled, to ensure the flatness of the second electrically conductive layer 3. For example, the second electrically conductive layer 3 on the surface of the first electrically conductive layer 2 can be solidified by maintaining at 100 to 150°C for 5-12 hrs.

An embodiment of the present disclosure provides a current collector. The current collector includes a support layer 1, a first electrically conductive layer 2 having a grid structure 20 and a second electrically conductive layer 3 formed on the first electrically conductive layer 2. By providing the support layer 1, the strength requirement of the current collector is met, and by the first electrically conductive layer 2 and the second electrically conductive layer 3, the electrical conductivity of the current collector is attained. In the embodiment of the present disclosure, the first electrically conductive layer 2 has a grid structure 20 formed on the support layer 1, thus reducing the weight per unit area of the current collector, and improving the energy density of the battery.

The performance of the current collector prepared in this embodiment and the performance of a battery prepared with the current collector are verified by way of specific examples.

### Example 1

1) Grids were printed on a first surface 11 and a second surface 12 of a 5 µm-thick polypropylene support layer (the printing slurry was prepared by adding water to CMC and silica mixed at a weight ratio of 1:9, and the grids were dried after printing). Aluminum is deposited on the support layer printed with grids by physical vapor deposition, cleaned (the grids printed on the support layer wound be dissolved, and removed in the cleaning process), and dried, to form a first electrically conductive layer 2. The thickness of deposited aluminum is 5 µm, the grid hole is a square with a side length of 1 cm, and the spacing is 1 mm.

NMP was added to PVDF and carbon nanotubes mixed at a weight ratio of 5:95 to prepare a uniform slurry, and the slurry was coated on the two first electrically conductive layers, to form a second electrically conductive layer on the first electrically conductive layer. After drying and rolling, a porous current collector was obtained. The porous current collector is a positive electrode current collector designated as S1.

Lithium iron phosphate, PVDF, carbon nanotubes, and carbon black were mixed at a weight ratio of 95:2:1.5:1.5, to which NMP was added to prepare a positive electrode slurry. The positive electrode slurry was coated on the second electrically conductive layer, dried, rolled, and cut to form a positive electrode sheet. The positive electrode sheet has an areal density of 200 g/m2.

2) Grids were printed on a first surface 11 and a second surface 12 of a 5 µm-thick polypropylene support layer (the printing slurry was prepared by adding water to CMC and silica mixed at a weight ratio of 1:9, and the grids were dried after printing). Copper is deposited on the support layer 1 printed with grids by physical vapor deposition, cleaned, and dried, to form a first electrically conductive layer 2. The thickness of deposited copper is 5 µm, the grid hole is a square with a side length of 1 cm, and the spacing is 1 mm.

NMP was added to PVDF and carbon nanotubes mixed at a weight ratio of 5:95 to prepare a uniform slurry, and the slurry was coated on the two first electrically conductive layers, to form a second electrically conductive layer on the first electrically conductive layer. After drying and rolling, a porous current collector was obtained. The porous current collector is a negative electrode current collector designated as S2.

Graphite CMC, carbon nanotubes, and carbon black were mixed at a weight ratio of 95:2:1.5:1.5, to which NMP was added to prepare a negative electrode slurry. The negative electrode slurry was coated on the second electrically conductive layer, dried, rolled, and cut to form a negative electrode sheet. The negative electrode sheet has an areal density of 90 g/m2.

3) A pouch battery of 6.1 cm*7.2 cm was prepared with the positive electrode sheet and the negative electrode sheet above, in which the amount of electrolyte solution injected was 2 mL. After infiltration, formation, aging, and capacity grading, The battery was subjected to charging and discharging test at 0.5C.

### Comparative Example 1

Lithium iron phosphate, PVDF, carbon nanotubes, and carbon black were mixed at a weight ratio of 95:2:1.5:1.5, to which NMP was added to prepare a positive electrode slurry. The positive electrode slurry was coated on a 10 µm-thick aluminum foil current collector D1, dried, rolled, and cut to form a positive electrode sheet. The positive electrode sheet has an areal density of 200 g/m2.

Graphite CMC, carbon nanotubes, and carbon black were mixed at a weight ratio of 95:2:1.5:1.5, to which water was added to prepare a slurry. The slurry was coated on a 10 µm-thick copper foil current collector D2, dried, rolled, and cut to form a negative electrode sheet. The negative electrode sheet has an areal density of 90 g/m2.

A pouch battery of 6.1 cm*7.2 cm was prepared with the above electrode sheets, in which the amount of electrolyte solution injected was 2 mL. After infiltration, formation, aging, and capacity grading, the battery was subjected to charging and discharging test at 0.5C.

The current collectors S1, S2, D1, and D2 were weighed respectively, and the weight per unit area was calculated. Each battery was constant-current charged to 3.8 V at 0.5C at room temperature, and then the discharging capacity and charging capacity of the battery were recorded.

| Current collector | Weight per unit area/g/m² | First discharge capacity/mAh |
|---|---|---|
| S1 | 4 | 100 |
| S2 | 10 | |
| D1 | 41 | 102 |
| D2 | 73 | |

It is found through comparison that the weight per unit area of the current collector prepared in the present disclosure is only 10-15% of the weight per unit area of the current collector used in the related art, so the weight proportion of the current collector in battery is greatly reduced. Moreover, the current collector has good performance, and the battery capacity is up to 98% or higher of the conventional current collector.

In the above embodiments, the differences between the various embodiments are mainly described. Where not contradictory, the different optimal features of various embodiments can be combined to form a more preferred embodiment, which will not be detailed here, considering the brevity of description.

Although some specific embodiments of the present disclosure have been described in detail by way of examples, a person skilled in the art should understand that the foregoing examples are merely provided for description, and not intended to limit the scope of the present disclosure. A person skilled in the art should appreciate that modifications can be made to the foregoing embodiments without departing from the scope and spirit of the present disclosure. The scope of the present disclosure is defined by the appended claims.

## Claims

1. A current collector, comprising:
a support layer (1), the support layer (1) having a first surface (11) and a second surface (12) arranged opposite to each other;
a first electrically conductive layer (2), the first electrically conductive layer (2) having a grid structure (20) distributed on a first surface (11) and/or a second surface (12) of the support layer (1); and
a second electrically conductive layer (3), the second electrically conductive layer (3) being provided on a surface of the first electrically conductive layer (2) away from the support layer (1).

2. The current collector according to claim 1, wherein the first electrically conductive layer (2) has a thickness in the range of 0.1 µm to 50 µm.

3. The current collector according to claim 1 or 2, wherein the support layer (1) has a thickness in the range of 0.1 µm-20 µm.

4. The current collector according to any one of claims 1 to 3, wherein the current collector has a thickness in the range of 1 µm to 100 µm.

5. The current collector according to any one of claims 1 to 4, wherein the grid structure (20) comprises grid holes (201), and the grid hole (201) has an area in the range of 0.01 cm² to 100 cm².

6. The current collector according to any one of claims 1 to 5, wherein the grid structure (20) comprises grid holes (201), the grid hole (201) is defined by grid walls (202), and the grid wall (202) has a wall thickness in the range of 0.1 mm to 50 mm.

7. The current collector according to any one of claims 1 to 6, wherein the second electrically conductive layer (3) has a thickness in the range of 0.1 µm to 50 µm.

8. The current collector according to any one of claims 1 to 7, wherein the support layer (1) is a thermoplastic elastomer layer with pores.

9. The current collector according to any one of claims 1 to 8, further comprising a third electrically conductive layer (4), wherein the third electrically conductive layer (4) has a grid structure (20) distributed on the first surface (11) or the second surface (12) of the support layer (1).

10. The current collector according to claim 9, wherein the first electrically conductive layer (2) is distributed on the first surface (11) of the support layer (1), and the third electrically conductive layer (4) is distributed on the second surface (12) of the support layer (1).

11. The current collector according to claim 9, wherein the first electrically conductive layer (2) is distributed on the second surface (12) of the support layer (1), and the third electrically conductive layer (4) is distributed on the first surface (11) of the support layer (1).

12. The current collector according to any one of claims 9 to 11, wherein the second electrically conductive layer (3) is provided on a surface of the third electrically conductive layer (4) away from the support layer (1).

13. The current collector according to any one of claims 9 to 12, wherein the first electrically conductive layer (2) is a metal component, and the third electrically conductive layer (4) is a metal component.

14. An electrode sheet, comprising: a current collector according to any one of claims 1 to 13 and an electrode slurry layer, the electrode slurry layer being formed on the second electrically conductive layer (3).

15. A preparation method for a current collector, the current collector being a current collector according to any one of claims 1 to 13, comprising:
providing a support layer (1);
forming a first electrically conductive layer (2) on a first surface (11) and/or a second surface (12) of the support layer (1) by at least one of press printing, printing, deposition, and magnetron sputtering, the first electrically conductive layer (2) having a grid structure (20) distributed on the support layer (1);
forming a second electrically conductive layer (3) on the whole surface of the first electrically conductive layer (2); and
drying the second electrically conductive layer (3), to solidify the second electrically conductive layer (3), so as to prepare the current collector.
